# EUROPEAN PATENT APPLICATION

(11) **EP 4 509 351 A1**
(43) Date of publication of application: **19.02.2025**
(21) Application number: 22937746.0
(22) Date of filing: 19.04.2022
(51) Int. Cl.: B60L 53/80

(54) **BATTERY SWAPPING METHOD AND BATTERY SWAPPING SYSTEM**

(71) Applicant: Contemporary Amperex Energy Service Technology Limited, Xiamen, Fujian 361001 (CN)
(72) Inventor: HE, Lewei, Xiamen, Fujian 361001 (CN)
(74) Representative: Gong, Jinping
(86) International application number: PCT/CN2022/087548
(87) International publication number: WO 2023/201508

(57) **Abstract**

Embodiments of the present application provide a battery replacement method and a battery replacement system, which can effectively reduce time required for replacing a battery of an electric vehicle. The method is utilized in a battery replacement system, which includes a dismounting and mounting device and moving devices, the dismounting and mounting device disposed at a position corresponding to a chassis of an electrical equipment, the moving devices including a first moving device and a second moving device, the method includes: controlling, after the electric equipment is parked at a predetermined position, the dismounting and mounting device to dismount a battery to be dismounted from the electric equipment, and the first moving device to convey a battery to be mounted to the dismounting and mounting device; and controlling, after the battery to be dismounted has been dismounted by the dismounting and mounting device, the dismounting and mounting device to mount the battery to be mounted on the electrical equipment, and the second moving device to convey the battery to be dismounted which has been dismounted by the dismounting and mounting device to a battery storage mechanism.

## Description

### TECHNICAL FIELD

The present application relates to the field of battery replacement technology, and in particular to a battery replacement method and a battery replacement system.

### BACKGROUND

Energy conservation and emission reduction are key to sustainable development of an automobile industry. In this context, electric vehicles have become an important part of the sustainable development of the automobile industry due to their energy-saving and environmentally friendly advantages. For an electric vehicle, battery charging and replacement technology is an important factor of its development.

At present, in addition to charge a battery in an electric vehicle through a charging device to ensure continuous operation of the electric vehicle, the battery in the electric vehicle may be replaced at a battery replacement station to quickly replenish energies for the electric vehicle with insufficient energies, thereby avoiding a long time required for charging the battery. However, there is generally a problem in an existing battery replacement station that the time required for battery replacement is still longer.

### SUMMARY

Embodiments of the present application provide a battery replacement method and a battery replacement system, which can reduce time required for replacing a battery of an electric vehicle.

In a first aspect, there is provided a battery replacement method utilized in a battery replacement system, which includes a dismounting and mounting device and moving devices, the dismounting and mounting device disposed at a position corresponding to a chassis of an electrical equipment, the moving devices including a first moving device and a second moving device, the method includes: controlling, after the electric equipment is parked at a predetermined position, the dismounting and mounting device to dismount a battery to be dismounted from the electric equipment, and the first moving device to convey a battery to be mounted to the dismounting and mounting device; and controlling, after the battery to be dismounted has been dismounted by the dismounting and mounting device, the dismounting and mounting device to mount the battery to be mounted on the electrical equipment, and the second moving device to convey the battery to be dismounted which has been dismounted by the dismounting and mounting device to a battery storage mechanism.

In the embodiment of the present application, the first moving device is controlled to convey the battery to be mounted while the dismounting and mounting device is being controlled to disassemble the battery to be dismounted, and the second moving device is controlled to convey the battery to be dismounted which has been dismounted to the battery storage mechanism while the dismounting and mounting device is being controlled to mount the battery to be mounted on the electrical equipment. That is, the entire battery replacement process is carried out in parallel, which can effectively reduce time for battery replacement and thereby improve user experience.

Furthermore, the first moving device and the second moving device convey the battery to be mounted and the battery to be dismounted respectively, which can avoid a problem of mistaking the battery to be mounted for the battery to be dismounted or mistaking the battery to be dismounted for the battery to be mounted.

In some possible implementations, the first moving device may include a plurality of first moving devices, and in a case where there are a plurality of batteries to be mounted which are needed to be placed on the electrical equipment, the controlling the first moving device to convey the battery to be mounted to the dismounting and mounting device may include: controlling at least a part of the first moving devices each to convey the batteries to be mounted, wherein each of the first moving devices is configured to convey one of the batteries to be mounted to the dismounting and mounting device at a time, and at least two of the at least a part of the first moving devices are configured to convey respective batteries to be mounted in overlapped periods.

In the above technical solution, there are a plurality of first moving devices and at least two of the at least a part of the first moving devices convey respective batteries to be mounted in overlapped periods. That is, conveyings of batteries to be mounted by the first moving devices are implemented in parallel, which can further reduce the time for battery replacement.

In some possible implementations, the second moving device may include a plurality of second moving devices, and in a case where there are a plurality of batteries to be dismounted which are needed to be dismounted by the dismounting and mounting device, the controlling the second moving device to convey the battery to be dismounted which has been dismounted by the dismounting and mounting device to the battery storage mechanism may include: controlling at least a part of the second moving devices each to convey the batteries to be dismounted, wherein each of the second moving devices conveys one of the batteries to be dismounted to the battery storage mechanism at a time, and at least two of the at least a part of the second moving devices convey respective batteries to be dismounted to the battery storage mechanism in overlapped periods.

In the above technical solution, there are a plurality of second moving devices and at least two of the at least a part of the second moving devices convey respective batteries to be dismounted in overlapped periods. That is, conveyings of batteries to be dismounted by the second moving devices are implemented in parallel, which can further reduce the time for battery replacement.

In some possible implementations, the controlling the first moving device to convey the battery to be mounted to the dismounting and mounting device may include: controlling the first moving device to convey the battery to be mounted to the dismounting and mounting device through a first path; and the controlling the second moving device to convey the battery to be dismounted which has been dismounted by the dismounting and mounting device to the battery storage mechanism includes: controlling the second moving device to convey the battery to be dismounted to the battery storage mechanism through a second path, wherein the first path and the second path are different.

In the above technical solution, the first moving device and the second moving device respectively convey the battery to be mounted and the battery to be dismounted through different paths. In view of this, the controls are simple, and on the other hand, it avoids collision and any other unexpected situation for the first moving device and the second moving device during conveying, thus effectively ensuring normal progress of the battery replacement process.

In some possible implementations, the first moving device conveys the battery to be mounted and the second moving device conveys the battery to be dismounted may both though a third path, and the method may further include: controlling the first moving device and the second moving device to reuse the third path in a time-division way.

In the above technical solution, the first moving device and the second moving device share a common path to convey the battery to be mounted and the battery to be dismounted respectively, which eliminates a need to set up an additional path, saves resources of the battery replacement system and reduces costs for battery replacement.

In some possible implementations, after the battery to be mounted has been conveyed by the first moving device to the dismounting and mounting device, the method may further include: arraying the first moving device and the second moving device at both sides of the dismounting and mounting device respectively.

In the above technical solution, the first moving device and the second moving device are arranged at both sides of the dismounting and mounting device respectively. In this way, it is not easy to mistake the battery to be dismounted and the battery to be mounted during operations of the dismounting and mounting device, which not only improves efficiency of battery replacement and ensures normal progress of the battery replacement process.

In some possible implementations, after the battery to be mounted has been conveyed by the first moving device to the dismounting and mounting device, the method may further include: arranging the first moving device and the second moving device in order, so that the first moving device is arranged after the second moving device.

In the above technical solution, the moving devices are arranged in order so that the dismounting and mounting device can be controlled to pick up and place batteries at only one side, which is a simple control and can reduce complexity of the dismounting and mounting device. In addition, placing the first moving device behind the second moving device facilitates the dismounting and mounting device to first dismount the battery to be dismounted and then mount the battery to be mounted, thereby ensuring normal progress of the battery replacement process.

In some possible implementations, before the electrical equipment is parked at the predetermined position, the method may further include: disposing the dismounting and mounting device below ground.

In the above technical solution, by disposing the dismounting and mounting device below the ground, there is no need to lift the electrical equipment to an excessive height, which effectively ensuring safety of the electrical equipment and improving user experience.

In some possible implementations, the battery replacement system may further include a lifting device, and the method may further include: controlling the lifting device to lift the electrical equipment to a predetermined height for the dismounting and mounting device to dismount the battery to be dismounted and to mount the battery to be mounted on the electrical equipment; and controlling, after the battery to be mounted has been mounted by the dismounting and mounting device on the electrical equipment, the lifting device to lower the electrical equipment to the predetermined position.

In the above technical solution, lifting the electrical equipment when the dismounting and mounting device dismounts the battery to be dismounted and mount the battery to be mounted can avoid an influence of a spring on tires on battery location, so the dismounting and mounting device can accurately locates a battery to be dismounted and accurately mounts, after the battery to be dismounted has been dismounted, a battery to be mounted on the electrical equipment, which effectively improves efficiency of battery replacement.

In some possible implementations, the predetermined height may be less than 50 centimeters.

In the above technical solution, the predetermined height is less than 50 centimeters, that is, the lifting device lifts the electrical equipment to a relative lower height, which can save time for lifting the electrical equipment, thereby reducing time for battery replacement, and on the other hand, if the electrical equipment is lifted too high, the electrical equipment may fall down, so the predetermined height being less than 50 centimeters can avoid these situations and ensure safety of the electrical equipment.

In some possible implementations, the batteries to be mounted may include fully charged batteries and include battery filling blocks not having a battery cell, and wherein a total number of the fully charged batteries and the battery filling blocks is equal to a number of the batteries to be dismounted.

In the above technical solution, by mounting the fully charged batteries and the battery filling blocks at positions of the batteries to be dismounted, it can avoid a problem that an interface would other be exposed due to a part of the positions being left vacant after the batteries to be dismounted have been dismounted, thereby improving safety of the electrical equipment.

In some possible implementations, the batteries to be dismounted may include depleted batteries and include battery filling blocks not having a battery cell, wherein a total number of the depleted batteries and the battery filling blocks is equal to a number of the batteries to be mounted.

In the above technical solution, a total number of the depleted batteries and the battery filling blocks is equal to a number of batteries to be mounted, that is, a number of "real" batteries on the electrical equipment after the battery replacement is greater than a number of "real" batteries before the battery replacement, which can effectively improve endurance mileage of the electrical equipment.

In a second aspect, there is provided a battery replacement system including: a dismounting and mounting device, disposed at a position corresponding to a chassis of an electrical equipment for dismounting a battery to be dismounted from the electrical equipment and mounting a battery to be mounted on the electrical equipment; and moving devices, comprising a first moving device and a second moving device, wherein the first moving device is configured to convey the battery to be mounted to the dismounting and mounting device while the dismounting and mounting device is dismounting the battery to be dismounted, and the second moving device is configured to convey the battery to be dismounted which has been dismounted by the dismounting and mounting device to a battery storage mechanism while the dismounting and mounting device is mounting the battery to be mounted on the electrical equipment.

In some possible implementations, the first moving device may include a plurality of first moving devices, and in a case where there are a plurality of batteries to be mounted which are needed to be placed on the electrical equipment, at least a part of the first moving devices are configured to each convey the batteries to be mounted while the dismounting and mounting device is dismounting the battery to be dismounted, wherein each of the first moving devices is configured to convey one of the batteries to be mounted to the dismounting and mounting device at a time, and at least two of the at least a part of the first moving devices are configured to convey respective batteries to be mounted in overlapped periods.

In some possible implementations, the second moving device may include a plurality of second moving devices, and in a case where there are a plurality of batteries to be dismounted which are needed to be dismounted by the dismounting and mounting device, at least a part of the second moving devices are configured to each convey the batteries to be dismounted, wherein each of the second moving devices is configured to convey one of the batteries to be dismounted to the battery storage mechanism at a time, and at least two of the at least a part of the second moving devices are configured to convey respective batteries to be dismounted to the battery storage mechanism in overlapped periods.

In some possible implementations, the first moving device may be configured to convey the battery to be mounted from the battery storage mechanism to the predetermined position via a first path, and the second moving device may be configured to convey the battery to be dismounted from the predetermined position to the battery storage mechanism via a second path, and the first path and the second path are different.

In some possible implementations, the first moving device conveys the battery to be mounted and the second moving device conveys the battery to be dismounted may both though a third path, and the first moving device and the second moving device may be configured to reuse the third path in a time-division way.

In some possible implementations, after the battery to be mounted has been conveyed by the first moving device to the dismounting and mounting device, the first moving device and the second moving device may be arranged at both sides of the dismounting and mounting device respectively.

In some possible implementations, after the battery to be mounted has been conveyed by the first moving device to the dismounting and mounting device, the first moving device and the second moving device may be arranged in order, so that the first moving device is arranged after the second moving device.

In some possible implementations, the dismounting and mounting device may be disposed below ground.

**In** some possible implementations, the system may further include: a lifting device for lifting the electrical equipment to a predetermined height in order for dismounting the battery to be dismounted and mounting of the battery to be mounted on the electrical equipment by the dismounting and mounting device, and the lifting device is further configured to lower the electrical equipment to the predetermined position after the battery to be mounted has been mounted by the dismounting and mounting device on the electrical equipment.

**In** some possible implementations, the predetermined height may be less than 50 centimeters.

**In** some possible implementations, the batteries to be mounted may include fully charged batteries and include battery filling blocks not having a battery cell, and wherein a total number of the fully charged batteries and the battery filling blocks is equal to a number of the batteries to be dismounted.

In some possible implementations, the batteries to be dismounted may include depleted batteries and include battery filling blocks not having a battery cell, wherein a total number of the depleted batteries and the battery filling blocks is equal to a number of the batteries to be mounted.

### BRIEF DESCRIPTION OF THE DRAWINGS

In order to explain the technical solutions of the embodiments of the present application more clearly, the drawings required to be used in the embodiments of the present application will be briefly introduced below. Apparently, the drawings described below are only some embodiments of the present application and those of ordinary skill in the art can also obtain other drawings based on the drawings without exerting inventive efforts.
Fig. 1 is a schematic structural diagram of a battery replacement system according to an embodiment of the present application.
Fig. 2 is a schematic structural diagram of a battery replacement platform according to an embodiment of the present application.
Fig. 3 is a schematic flow chart of a battery replacement method according to an embodiment of the present application.
Fig. 4 is a schematic diagram of the steps of a battery replacement process according to an embodiment of the present application.
Fig. 5 is a schematic diagram of the steps of a battery replacement process according to an embodiment of the present application.
Fig. 6 is a schematic diagram of the steps of a battery replacement process according to an embodiment of the present application.
Fig. 7 is a schematic diagram of the steps of a battery replacement process according to an embodiment of the present application.
Fig. 8 is a schematic diagram of the steps of a battery replacement process according to an embodiment of the present application.
Fig. 9 is a schematic diagram of the steps of a battery replacement process according to an embodiment of the present application.
Fig. 10 is a schematic block diagram of a battery replacement system according to an embodiment of the present application.

In the drawings, the drawings are not drawn to actual scale.

### DETAILED DESCRIPTION

The implementation of the present application will be described in further detail below with reference to the accompanying drawings and embodiments. The detailed description of the following embodiments and the accompanying drawings are used to illustrate principles of the present application, but not to limit scope of the present application, that is, the present application is not limited to the described embodiments.

In the description of the present application, it should be noted that, unless otherwise stated, the term "a plurality of" means more than two; and an orientational or positional relationship indicated by a term such as "upper", "lower", "left", "right", "inside" and "outside" is provided only for convenience of describing the present application and simplifying the description, does not indicate or imply that an involved device or element must have such specific orientation or be constructed and operated in such specific orientation, and therefore should not be understood as a limitation of the present application. Furthermore, the terms "first" "second" and "third" etc. are used for descriptive purposes only and should not be construed as indicating or implying relative importance. The term "vertical" is not vertical in a strict sense, but with an allowable error tolerance. The term "parallel" is not parallel in a strict sense, but with an allowable error tolerance.

The directional terms appearing in the following description indicate directions shown in the figures and do not limit a specific structure in the present application. In the description of the present application, it should also be noted that, unless otherwise clearly stated and limited, the terms "installation", "connection" and "connecting" should be understood in a broad sense. For example, it may be a fixed connection or a detachable connection, or an integral connection; may be a direct connection or an indirect connection through an intermediate medium. For those of ordinary skill in the art, specific meanings of the above terms in the present application should be understood based on specific circumstances.

The term "and/or" in the present application is just an association relationship describing related objects, which indicates that there may be three relationships, for example, "A and/or B" may indicates three situations of: A alone, A and B simultaneously, and B alone. In addition, the character "/" in the present application generally indicates that involved objects have an "or" relationship.

Unless otherwise defined, all technical and scientific terms used in the present application have the same meanings as commonly understood by those of ordinary skill in the art; the terms used in the description of the present application are only provided for describing specific embodiment, not intended to limit the present application; the terms "including" and "comprising" and any variations thereof in the description, claims and the above description of the drawings of the present application are intended to cover non-exclusive inclusion. The terms "first", "second", etc. in the description, claims or the above-mentioned drawings of the present application are used to distinguish different objects, rather than to describe a specific order or priority relationship.

Reference in the present application to "an embodiment" means that a particular feature, structure or characteristic described in connection with the embodiment may be included in at least one embodiment of the present application. The appearances of this phrase in various places in the description are not necessarily all referring to a same embodiment, nor are separate or alternative embodiments mutually exclusive of other embodiments. Those of ordinary skill in the art understand explicitly and implicitly that the embodiments described herein may be combined with other embodiments.

With development of new energy technologies, batteries are applicable to more and more extensive fields. For example, a battery can be used as a power source to power a vehicle so as to reduce use of non-renewable resources. When power from the battery in the vehicle is not enough to support continued driving of the vehicle, a charging equipment such as a charging pile can be used to charge the vehicle, that is, to charge the battery in the vehicle, so as to realize cyclic utilization of the battery through charging and discharging. However, charging of a battery takes a relatively longer time, which limits the vehicle's endurance mileage.

In order to improve the vehicle's endurance mileage, a battery replacement technology came into being. The battery replacement technology can provide a battery replacement service for a vehicle at a battery replacement station with "separation of battery from vehicle", which indicates that the battery can be quickly dismounted from the vehicle or mounted on the vehicle. The battery dismounted from the vehicle can be placed in a battery storage mechanism in the battery replacement station for being charged in preparation for utilization in battery replacement for a subsequent vehicle entering the battery replacement station.

In conventional technologies, actions of dismounting a battery to be dismounted from an electrical equipment, mounting a battery to be mounted on the electrical equipment, and conveying the battery to be dismounted and the battery to be mounted are all performed by a rail guided vehicle (RGV). Specifically, after the electrical equipment is parked at a battery replacement platform, the RGV first dismount the battery to be dismounted from the electrical equipment. Then, the RGV moves to vicinity of the battery storage mechanism and place the battery which has been dismounted into the battery storage mechanism. Next, the RGV gets the battery to be mounted and convey the battery to be mounted to a position under the electrical equipment. After that, the RGV mount the battery to be mounted on the electrical equipment.

Obviously, the RGV operates serially during its entire operation process. This operation way takes a relative longer time, which in turn results in a longer time required for battery replacement for the vehicle and affects user experience.

Based on this, the embodiments of the present application provide a battery replacement method. With provision of a dismounting and mounting device for mounting and dismounting a battery and a first moving device and second moving device for conveying a battery, the method controls the first moving device to convey the battery to be mounted while the dismounting and mounting device is dismounting the battery to be dismounted, and controls the second moving device to convey the battery to be dismounted which has been dismounted to the battery storage mechanism while the dismounting and mounting device is mounting the battery to be mounted on the electrical equipment. That is, the entire battery replacement process is carried out in parallel, which can effectively reduce time for battery replacement and thereby improve user experience.

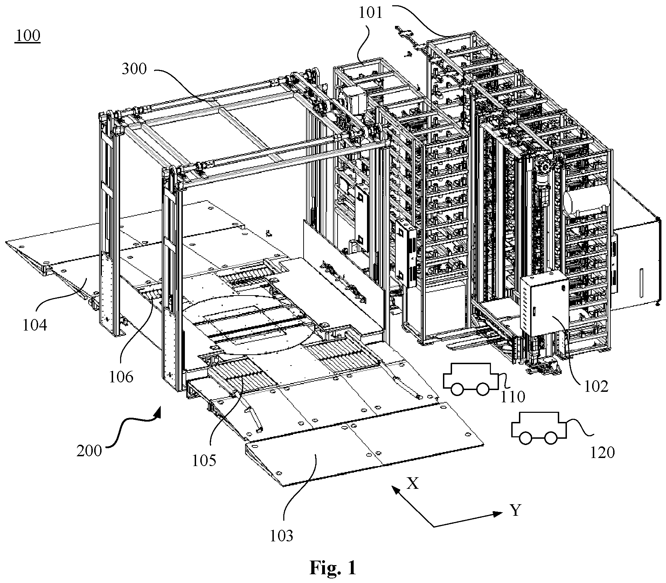

Fig. 1 shows a schematic diagram of a battery replacement system according to an embodiment of the present application. The battery replacement method according to the embodiments of the present application is applicable in the battery replacement system. As can be seen from Fig. 1, the electrical equipment is a vehicle requiring battery replacement.

As shown in Fig. 1, the battery replacement system 100 includes a battery storage mechanism 101. The battery storage mechanism 101 may be provided with a plurality of batteries. The battery storage mechanism 101 includes a battery charging compartment and a battery cache device. The battery charging compartment is configured to store a battery so as to charge the battery. The battery cache device is configured to temporarily store batteries to be dismounted which have been removed from a vehicle.

In addition to the battery storage mechanism in a battery shelf, the battery replacement system 100 may further include a stacker 102, moving devices, and a dismounting and mounting device (not shown in Fig. 1). The moving devices include a first moving device 110 and a second moving device 120. The dismounting and mounting device is configured to dismount a battery to be dismounted from a battery replacement vehicle 1, and while the dismounting and mounting device is dismounting the battery to be dismounted, the stacker 102 can convey a battery to be mounted in the battery storage mechanism 101 to the first moving device 110. The first moving device 110 carries the battery to be mounted and moves it to the battery replacement vehicle 1. In addition, the dismounting and mounting device is further configured to mount a battery to be mounted on the battery replacement vehicle 1. At the same time, the second moving device 120 can convey a battery to be dismounted which has been dismounted from the battery replacement vehicle 1 to the battery cache device, and the stacker 102 conveys the battery in the battery cache device to the battery storage mechanism 101, so that the battery storage mechanism 101 charges the battery.

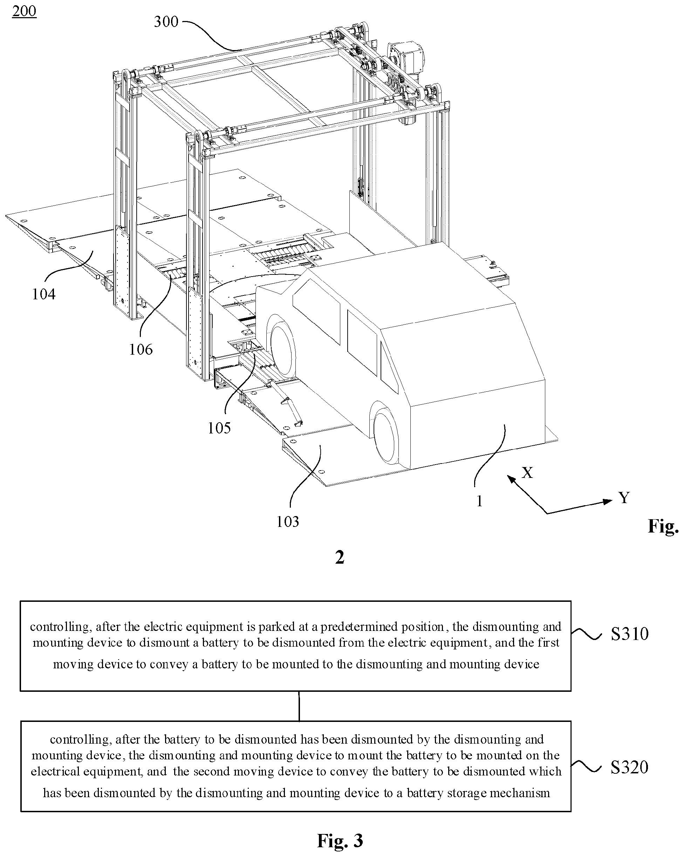

The power replacement station 100 may further include a battery replacement platform 200. Fig. 2 shows a schematic diagram of the battery replacement vehicle 1 traveling on the battery replacement platform 200. On the battery replacement platform 200, the dismounting and mounting device can swap the battery of the battery replacement vehicle 1. The X direction in Figs. 1 and 2 may be a traveling direction of the battery replacement vehicle 1 on the battery replacement platform 200, and the Y direction may be a traveling direction of the first moving device and the second moving device on the battery replacement platform 200. Exemplarily, the first moving device 110 can move to vicinity of the battery replacement vehicle 1 along the Y direction through guide rails on the battery replacement platform 200.

As an example, in the embodiment shown in Figs. 1 and 2, the battery replacement platform 200 may include a front ramp 104, a front wheel positioning roller 106, a rear ramp 103, and a rear wheel positioning roller 105. The battery replacement vehicle 1 can travel from the rear ramp 103 toward the front ramp 104, as shown in Fig. 2. Along the traveling direction of the battery replacement vehicle 1, the front wheel positioning roller 106 and the rear wheel positioning roller 105 may be located between the front ramp 104 and the rear ramp 103. The front wheel positioning roller 106 can be disposed close to the front ramp 104, and the rear wheel positioning roller 105 can be disposed close to the rear ramp 103. The front wheel positioning roller 106 can be used to position front wheels of the vehicle 1. The rear wheel positioning roller 105 can be used to position rear wheels of the vehicle 1. The battery replacement platform 200 can position the battery replacement vehicle 1 in the X direction and the Y direction with the front wheel positioning roller 106 and the rear wheel positioning roller 105, such that the battery replacement vehicle 1 can be fixed relative to the battery replacement platform 200. After the battery replacement platform 200 completes the positioning of the battery replacement vehicle 1, the dismounting device can dismount a battery to be dismounted in the vehicle.

Optionally, a locking mechanism may be provided in a chassis of the battery replacement vehicle 1, and a locking portion corresponding to the locking mechanism is provided in the battery. The locking mechanism can be used to lock the locking portion such that the battery can be locked and mounted on the chassis of the battery replacement vehicle 1. Correspondingly, the locking structure can also be configured to unlock the locking portion such that the battery can be unlocked and is removable from the chassis of the battery replacement vehicle 1. During the above-mentioned processes of dismounting and mounting a battery by the dismounting and mounting device, the dismounting and mounting device can press the battery upward to realize unlocking of the locking portion in the battery from the locking mechanism in the battery replacement vehicle 1 or locking of the locking portion in the battery with the locking mechanism in the battery replacement vehicle 1, thereby completing dismounting or mounting of the battery. It should be understood that in addition to the pressing method, the dismounting and mounting device can realize the unlocking of the locking portion from the locking mechanism and locking of the locking portion with the locking mechanism through any other method, such as using bolts.

The battery in the above description may be or a sodium-ion battery, or the like, which is not specifically limited in the embodiments of the present application. In terms of battery scale, the power battery in the embodiments of the present application may be a cell/battery cell, or a battery module or a battery pack, which is not specifically limited in the embodiments of the present application. In addition to being used as a power source to supply power to a motor of the battery replacement vehicle 1, the battery can also provide power to a gas-powered device in the battery replacement vehicle 1. For example, the battery can supply power to an air conditioner, a player or the like in the vehicle. Generally speaking, the battery in the above description can be a "real" battery.

Alternatively, the battery in the above description may be a battery filling block which is similar to the battery. The battery filling block may have the same casing as the battery, that is, the battery filling block can also be mounted on the vehicle, but the battery filling block does not include a battery cell and cannot provide electrical energy to the vehicle. Generally speaking, the battery filler block may be referred to a "fake" battery. The battery filler block can also be placed in the battery storage mechanism. For example, the battery charging compartment may be divided into two parts, one of which includes a charging compartment for placing a "real" battery and charging the battery and the other of which includes a charging compartment for placing the battery filling block, but not for charging the battery filling block. Optionally, the charging compartment used to place the battery filling block may have no charging function and only plays as an accommodation function.

Fig. 3 shows a schematic flow chart of a battery replacement method 300 according to an embodiment of the present application. The method 300 is applicable to a battery replacement system. The battery replacement system may be, for example, the battery replacement system 100 shown in Fig. 1. The battery replacement system includes a dismounting and mounting device and moving devices, wherein the dismounting and mounting device is disposed at a position corresponding to a chassis of an electrical equipment, and the moving devices include a first moving device and a second moving device.

The method 300 may be executed by a control unit in the battery replacement system, such as a station control system. The method 300 may include at least a part of the following contents.

S310: after the electric equipment is parked at a predetermined position, the dismounting and mounting device is controlled to dismount a battery to be dismounted from the electric equipment, and controlling the first moving device to convey a battery to be mounted to the dismounting and mounting device.

S320: after the battery to be dismounted has been dismounted by the dismounting and mounting device, the dismounting and mounting device is controlled to mount the battery to be mounted on the electrical equipment, and the second moving device is controlled to convey the battery to be dismounted which has been dismounted by the dismounting and mounting device to a battery storage mechanism.

In the embodiment of the present application, the first moving device is controlled to convey the battery to be mounted while the dismounting and mounting device is being controlled to disassemble the battery to be dismounted, and the second moving device is controlled to convey the battery to be dismounted which has been dismounted to the battery storage mechanism while the dismounting and mounting device is being controlled to mount the battery to be mounted on the electrical equipment. That is, the entire battery replacement process is carried out in parallel, which can effectively reduce time for battery replacement and thereby improve user experience.

Furthermore, the first moving device and the second moving device convey the battery to be mounted and the battery to be dismounted respectively, which can avoid a problem of mistaking the battery to be mounted for the battery to be dismounted or mistaking the battery to be dismounted for the battery to be mounted.

Optionally, the first moving device and the second moving device may be RGVs, or they may be automated guided vehicles (AGVs). Of course, they may be any other moving devices.

Optionally, the dismounting and mounting device may be, but is not limited to, a device with a mechanical arm. The electrical equipment may be, but is not limited to, a battery replacement vehicle, and the predetermined position may be, for example, the battery replacement platform as shown in Fig. 2.

Optionally, a number of batteries included in the electrical equipment may be equal to a number of batteries to be dismounted. For example, the electrical equipment may include K batteries, and the number of batteries to be dismounted and the number of batteries to be mounted are also K. Alternatively, the electrical equipment may include a greater number of batteries than the number of batteries to be dismounted. For example, the electrical equipment may include K batteries, while the number of batteries to be dismounted and the number of batteries to be mounted are L, where L<K. That is, only some of the batteries in the electrical equipment are swapped.

The batteries to be dismounted may all be depleted batteries, and the batteries to be mounted may all be fully charged batteries. That is, the batteries to be dismounted and the batteries to be mounted each includes a cell. Generally speaking, the battery to be dismounted and the battery to be mounted are "real" batteries.

Alternatively, in a case where there are a plurality of batteries to be dismounted and a plurality of batteries to be mounted, some of the batteries to be dismounted may be battery filling blocks and/or some of the batteries to be mounted may be battery filling blocks. Specifically, the batteries to be mounted may include fully charged batteries and battery filling blocks, and a sum of the number of the fully charged batteries and the number of the battery filling blocks is equal to the number of batteries to be dismounted. For example, the battery to be dismounted includes 4 depleted batteries, and the battery to be mounted includes 3 fully charged batteries and 1 battery filling block. By mounting the fully charged batteries and the battery filling block at locations of the batteries to be dismounted, it can avoid a problem that an interface would other be exposed due to a part of the positions being left vacant after the batteries to be dismounted have been dismounted, thereby improving safety of the electrical equipment.

Alternatively, the batteries to be dismounted may include depleted batteries and battery filling blocks, and a sum of the number of the depleted batteries and battery filling blocks is equal to the number of batteries to be mounted. For example, the batteries to be dismounted includes 2 depleted batteries and 2 battery filling blocks, and the batteries to be mounted includes 4 fully charged batteries. That is, before battery replacement, 2 batteries provide power to the electrical equipment, and after the battery replacement, 4 batteries provide power to the electrical equipment. In the technical solution, the sum of the number of depleted batteries and the number of battery filling blocks is equal to the number of batteries to be mounted, that is, the number of "real" batteries on the electrical equipment after the battery replacement is greater than the number of "real" batteries before the battery replacement, which can effectively improve endurance mileage of the electrical equipment.

In addition to the depleted batteries and the battery filling blocks, the batteries to be dismounted may further include abnormal batteries, such as batteries that have experienced thermal runaway, or batteries that have deformed shape.

Of course, the batteries to be dismounted and the batteries to be mounted may both include a battery filling block. For example, the batteries to be dismounted includes 2 depleted batteries and 2 battery filling blocks, and the batteries to be mounted includes 2 fully charged batteries and 2 battery filling blocks.

It should be noted that the number of battery filling blocks included in the batteries to be dismounted and the number of battery filling blocks included in the batteries to be mounted may or may not be equal, and this is not specifically limited in the embodiments of the present application.

Optionally, the first moving device may convey one battery to be mounted at a time. Alternatively, multiple batteries to be mounted may be conveyed at one time, and in this case, for example, the first moving device may be provided with multiple compartments, each compartment being used to place one battery to be mounted. Similarly, the second moving device may convey one battery to be dismounted or multiple batteries to be dismounted at a time.

As an example, there may be one first moving device. In a case where there are multiple batteries to be mounted which are needed to be placed on the electrical equipment, the S310 may specifically include: controlling the dismounting and mounting device to dismount a battery to be dismounted, and controlling the first moving device to convey a first one of the multiple batteries to be mounted to the dismounting and mounting device, and when the dismounting and mounting device is mounting the first battery to be mounted, controlling the first moving device to return to the battery storage mechanism and conveys a second one of the multiple batteries to be mounted to the dismounting and mounting device. This cycle repeats until the dismounting and mounting device mounts the multiple batteries to be mounted on the electrical equipment.

There may be one second moving device. In a case where there are a plurality of batteries to be dismounted which are needed to be dismounted by the dismounting and mounting device and each of the second moving devices conveys one of the batteries to be dismounted at a time, the S310 may specifically include: controlling the dismounting and mounting device to mount the battery to be mounted on the electrical equipment, and controlling the second moving device to convey a first one of the multiple batteries to be dismounted to the battery storage mechanism, and then controlling the second moving device to return to the predetermined position, and controlling the second moving device to convey a second one of the multiple batteries to be dismounted to the battery storage mechanism. This cycle repeats until the second moving device conveys all of the batteries to be dismounted to the battery storage mechanism.

As another example, the first moving device may include a plurality of first moving devices. In a case where there are a plurality of batteries to be mounted to be mounted which are needed to be placed on the electrical equipment, the controlling the first moving device to convey the battery to be mounted to the dismounting and mounting device may specifically include: controlling at least a part of the first moving devices each to convey the batteries to be mounted, wherein each of the first moving devices conveys one of the batteries to be mounted to the dismounting and mounting device at a time, and at least two of the at least a part of the first moving devices convey respective batteries to be mounted in overlapped periods.

In this technical solution, there are a plurality of first moving devices and at least two of the first moving devices convey respective batteries to be mounted in overlapped periods. That is, conveyings by the first moving devices of respective batteries to be mounted are implemented in parallel, which can further reduce the time for battery replacement.

If the number of batteries to be mounted is equal to the number of first moving devices, each of the first moving devices can be controlled to convey one of the batteries to be mounted to the dismounting and mounting device. If the number of batteries to be mounted is less than the number of first moving devices, each of a part of the first moving devices can be controlled to convey one of the batteries to be mounted to the dismounting and mounting device at a time.

For controlling at least a part of the first moving devices to convey the batteries to be mounted, the at least a part of the first moving devices may be controlled such that they simultaneously convey respective batteries to be mounted to the dismounting and mounting device. Alternatively, the at least a part of the first moving devices may be controlled such that one of them conveys a battery to be mounted to the dismounting and mounting device every preset time period. The preset time period is not specifically limited in the embodiments of the present applications. For example, the preset time period may be 5 seconds. For another example, the preset time period may be determined based on a distance between the first moving devices and the dismounting and mounting device.

The second moving device may include a plurality of second moving devices. In a case where there are multiple batteries to be dismounted which are needed to be dismounted by the dismounting and mounting device, the controlling the second moving device to convey the battery to be dismounted which has been dismounted by the dismounting and mounting device to the battery storage mechanism may specifically include: controlling at least a part of the second moving devices each to convey the batteries to be dismounted, wherein each of the second moving devices conveys one of the batteries to be dismounted to the battery storage mechanism at a time, and at least two of the at least a part of the second moving devices convey respective batteries to be dismounted to the battery storage mechanism in overlapped periods.

In this technical solution, there are a plurality of second moving devices and at least two of the at least a part of the second moving devices convey respective batteries to be dismounted to the battery storage mechanism in overlapped periods. That is, conveyings by the second moving devices of batteries to be dismounted are implemented in parallel, which can further reduce the time for battery replacement.

If the number of batteries to be dismounted is equal to the number of second moving devices, each of the second moving devices can be controlled to convey one of the batteries to be dismounted to the battery storage mechanism. If the number of batteries to be dismounted is less than the number of second moving devices, each of a part of the second moving devices can be controlled to convey one of the batteries to be dismounted to the battery storage mechanism at a time.

For controlling at least a part of the second moving devices to convey the batteries to be dismounted, the at least a part of the second moving devices may be controlled such that they simultaneously convey respective batteries to be dismounted to the battery storage mechanism. Alternatively, the at least one of the second moving devices may be controlled such that one of them convey a battery to be dismounted to the battery storage mechanism every preset time period. The preset time period is not specifically limited in the embodiments of the present applications. For example, the preset time period may be 5 seconds. For another example, the preset time period may be determined based on a distance between the second moving devices and the battery storage mechanism. For another example, the preset time period may be determined based on time for the dismounting and mounting device disassembles a battery to be dismounted, that is, each time the dismounting and mounting device disassembles a battery to be dismounted, one of the second moving devices conveys a battery to be dismounted.

In one embodiment, the controlling the first moving device to convey the battery to be mounted to the dismounting and mounting device comprises: controlling the first moving device to convey the battery to be mounted to the dismounting and mounting device through a first path. The controlling the second moving device to convey the battery to be dismounted which has been dismounted by the dismounting and mounting device to the battery storage mechanism comprises: controlling the second moving device to convey the battery to be dismounted to the battery storage mechanism through a second path. The first path and the second path are different.

The first path and the second path are not specifically limited in the embodiments of the present application. For example, the first path may be a path from the left side of the electrical equipment to the battery storage mechanism, and the second path may be a path from the right side of the electrical equipment to the battery storage mechanism. As another example, the first path may be a path from the front of the electric equipment to the battery storage mechanism, and the second path may be a path from the rear of the electric equipment to the battery storage mechanism.

In the above technical solution, the first moving device and the second moving device respectively convey the battery to be mounted and the battery to be dismounted through different paths. In view of this, the controls are simple, and on the other hand, it avoids collision and any other unexpected situation for the first moving device and the second moving device during conveying, thus effectively ensuring normal progress of the battery replacement process.

In another embodiment, the first moving device conveys the battery to be mounted and the second moving device conveys the battery to be dismounted are both though a third path, and the method 300 further includes: controlling the first moving device and the second moving device to reuse the third path in a time-division way.

Optionally, the first moving devices and the second moving devices may be controlled to alternately convey the batteries to be mounted and the batteries to be dismounted through the third path. For example, the first moving devices and the second moving devices may be controlled to sequentially convey the batteries to be mounted and the batteries to be dismounted in an order of a first one of the first moving devices, a first one of the second moving devices, a second one of the first moving devices, a second one of the second moving devices.. the last one of the first moving devices, and the last one of the second moving devices. For another example, the first moving devices and the second moving devices may be controlled to sequentially convey the batteries to be mounted and the batteries to be dismounted in an order of a first one of the first moving devices, a second one of the first moving devices, a first one of the second moving devices, a second one of the second moving devices... and a penult one of the second moving devices and the last one of the second moving devices.

Optionally, it may be that after the first moving devices have completed conveying of the batteries to be mounted, the second moving devices are controlled to convey the batteries to be dismounted; or, after the second moving devices have completed conveying of the batteries to be dismounted, the first moving devices are controlled to convey the batteries to be mounted.

In the above technical solution, the first moving device and the second moving device share a common path to convey the battery to be mounted and the battery to be dismounted respectively, which eliminates a need to set up an additional path, saves resources of the battery replacement system and reduces costs for battery replacement.

It should be understood that in the embodiments of the present application, the terms "first", "second" and "third" are only used to distinguish different objects, but do not limit scope of the embodiments of the present application.

In some embodiments, the path by which the first moving device conveys a battery to be mounted to the dismounting and mounting device may be the same as or may be different from the path by which the first moving device returns to its original position from the dismounting and mounting device. Similarly, the path by which the second moving device conveys a battery to be dismounted to the battery storage mechanism may be the same as or may be different from the path by which the second moving device travels from its original position to the dismounting and mounting device.

It should be noted that the original position in the above description may refer to a position of the first moving device or the second moving device when there is no electrical equipment requiring battery replacement.

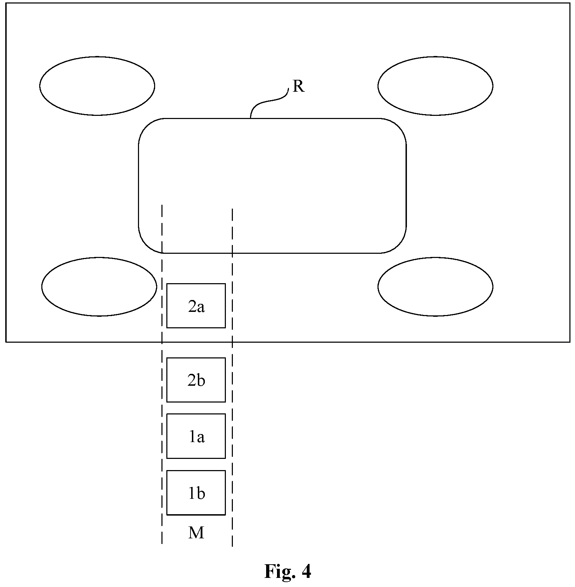

For example, as shown in Figs. 4 to 9, the number of batteries to be dismounted and the number of batteries to be mounted are both 2, the reference signs 2a and 2b denote the second moving devices, the reference signs 1a and 1b denotes the first moving devices, and the 4 ovals denotes tires of an electrical equipment, the reference sign R denotes the dismounting and mounting device.

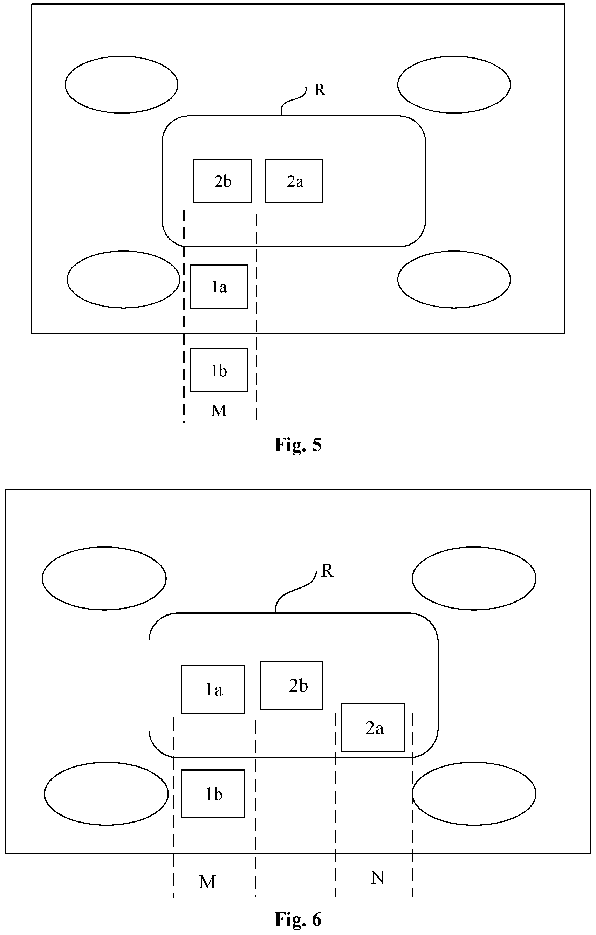

As can be seen from Fig. 4, the first moving devices 1a and 1b convey the batteries to be mounted to the dismounting and mounting device along a path M, and the second moving devices 2a and 2b also move along the path M from their original positions to the dismounting and mounting device. It can be seen from Figs. 5 to 9 that after the dismounting and mounting device has dismounted two batteries to be dismounted, the second moving devices 2a and 2b each conveys one of the batteries to be dismounted, and they convey the batteries to be dismounted to the battery storage mechanism via a path N.

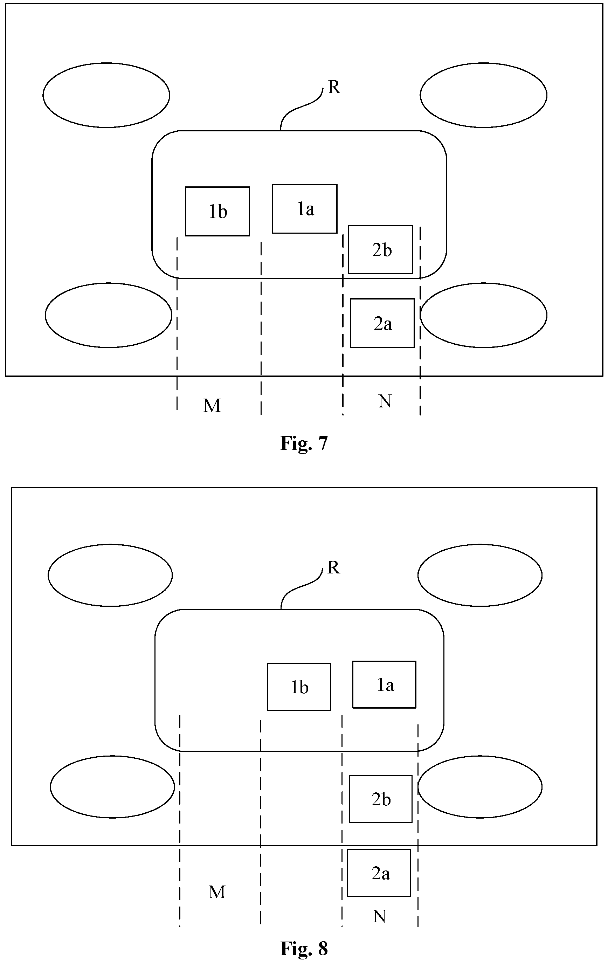

It can be seen from Figs. 7 to 9 that after the dismounting and mounting device has dismounted the batteries to be dismounted from the electrical equipment and mounted the battery to be mounted that is conveyed by the first moving device 1a on the electrical equipment, the first moving devices 1a and 1b both move one step forward in order for that the dismounting and mounting device can mount the battery to be mounted that is conveyed by the first moving device 1b on the electrical equipment. After that, the first moving devices 1a and 1b return to their original positions along the path M.

It can be seen that the path by which the first moving devices convey the batteries to be mounted to the dismounting and mounting device is the same as the path by which the first moving devices return to their original positions. The path by which the second moving devices convey the batteries to be dismounted to the battery storage mechanism is different from the path by which the second moving devices travels from their original positions to the dismounting and mounting device.

In some embodiments, after the first moving device conveys the battery to be mounted to the dismounting and mounting device, the method 300 may further include: arranging the first moving device and the second moving device at both sides of the dismounting and mounting device respectively.

In this technical solution, the first moving device and the second moving device are arranged at both sides of the dismounting and mounting device respectively. In this way, it is not easy to mistake the battery to be dismounted and the battery to be mounted during operations of the dismounting and mounting device, which not only improves efficiency of battery replacement and ensures normal progress of the battery replacement process.

Alternatively, the first moving device and the second moving device are arranged in order, so that the first moving device is arranged after the second moving device. For example, still referring to Fig. 4, after both the first moving devices and the second moving devices arrive at the dismounting and mounting device, the first moving devices and the second moving devices are arranged in order so that the first moving devices are arranged after the second moving devices.

In this technical solution, the moving devices are arranged in order so that the dismounting and mounting device can be controlled to pick up and place batteries at only one side, which is a simple control and can reduce complexity of the dismounting and mounting device. In addition, placing the first moving device behind the second moving device facilitates the dismounting and mounting device to first dismount the battery to be dismounted and then mount the battery to be mounted, thereby ensuring normal progress of the battery replacement process.

In the embodiments of the present application, the dismounting and mounting device is only used to disassemble batteries to be dismounted and mount batteries to be mounted, there is no need to convey the batteries to be dismounted and the batteries to be mounted as in conventional technical solutions. Therefore, the method 300 may further include: before the electrical equipment is parked at the predetermined position, the placing the dismounting and mounting device below the predetermined position.

It should be understood that "below" in the embodiments of the present application indicates a same direction as a direction of gravity.

Optionally, still referring to Fig. 2, in a case where the predetermined position includes a battery replacement platform and the battery replacement platform includes ramps as shown in Fig. 2, that is, there is a gap between the battery replacement platform and the ground, the dismounting and mounting device may be disposed on the ground.

Optionally, the dismounting and mounting device may be disposed below ground. For example, at a position corresponding to the chassis of the electrical equipment, a space capable of accommodating the dismounting and mounting device below the ground may be provided in advance. This space is used to accommodate the dismounting and mounting device. By arranging the dismounting and mounting device below the ground, there is no need to lift the electrical equipment to an excessive height, which effectively ensuring safety of the electrical equipment and improving user experience.

Due to consideration of shock absorption, the tire of the electrical equipment is generally equipped with springs. If the tire contacts the predetermined position, the presence of the spring may affect the positioning of a battery, causing difficulty for the dismounting and mounting device in dismounting a battery to be dismounted and mounting a battery to be mounted, which seriously affects efficiency of battery replacement.

Based on this, the battery replacement system may further include a lifting device, such as the lifting device 300 in Figs. 1 and 2. In this case, the method 300 may further include: controlling the lifting device to lift the electrical equipment to a predetermined height for the dismounting and mounting device to dismount the battery to be dismounted and to mount the battery to be mounted on the electrical equipment; and controlling, after the battery to be mounted has been mounted by the dismounting and mounting device on the electrical equipment, the lifting device to lower the electrical equipment to the predetermined position.

In the above technical solution, lifting the electrical equipment when the dismounting and mounting device dismounts the battery to be dismounted and mount the battery to be mounted can avoid an influence of a spring on tires on battery location, so the dismounting and mounting device can accurately locates a battery to be dismounted and accurately mounts, after the battery to be dismounted has been dismounted, a battery to be mounted on the electrical equipment, which effectively improves efficiency of battery replacement.

Optionally, the predetermined height may be less than 50 cm. For example, the lifting device may be controlled to lift the electrical equipment until the tires of the electrical equipment have just lifted off the ground.

The predetermined height is less than 50 centimeters, that is, the lifting device lifts the electrical equipment to a relative lower height, which can save time for lifting the electrical equipment, thereby reducing time for battery replacement, and on the other hand, if the electrical equipment is lifted too high, the electrical equipment may fall down, so the predetermined height being less than 50 centimeters can avoid these situations and ensure safety of the electrical equipment.

Of course, in the embodiments of the present application, the electrical equipment may not be lifted, that is, the predetermined height may be 0.

In the embodiments of the present application, the serial numbers of the above-mentioned processes does not mean an execution order. The execution order of the respective processes should be determined according to its functions and internal logic, and should not constitute any limitation on an implementation process of the embodiments of the present application.

Moreover, the various embodiments and/or the technical features in each embodiment described in this application can be combined arbitrarily with each other without conflicts, and a technical solution obtained through any combination should also fall within the protection scope of this application.

The battery replacement method according to the embodiments of the present application has been described in detail above. The battery replacement system according to the embodiments of the present application will be described below.

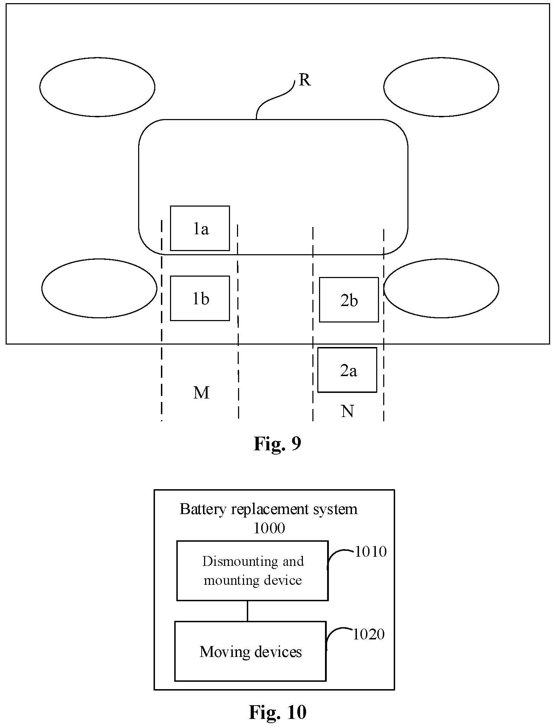

Fig. 10 shows a schematic block diagram of a battery replacement system 1000 according to an embodiment of the present application.

As shown in Fig. 10, the battery replacement system 1000 may include:
a dismounting and mounting device 1010, disposed at a position corresponding to a chassis of an electrical equipment for dismounting a battery to be dismounted from the electrical equipment and mounting a battery to be mounted on the electrical equipment;
moving devices 1020, comprising a first moving device and a second moving device, wherein the first moving device is configured to convey the battery to be mounted to the dismounting and mounting device 1010 while the dismounting and mounting device 1010 is dismounting the battery to be dismounted, and the second moving device is configured to convey the battery to be dismounted which has been dismounted by the dismounting and mounting device 1010 to a battery storage mechanism while the dismounting and mounting device 1010 is mounting the battery to be mounted on the electrical equipment.

Optionally, in the embodiments of the present application, the first moving device may include a plurality of first moving devices, and in a case where there are a plurality of batteries to be mounted which are needed to be placed on the electrical equipment, at least a part of the first moving devices are configured to each convey the batteries to be mounted while the dismounting and mounting device 1010 is dismounting the battery to be dismounted, wherein each of the first moving devices is configured to convey one of the batteries to be mounted to the dismounting and mounting device at a time, and at least two of the at least a part of the first moving devices are configured to convey respective batteries to be mounted in overlapped periods.

Optionally, in the embodiments of the present application, the second moving device may include a plurality of second moving devices, and in a case where there are a plurality of batteries to be dismounted which are needed to be dismounted by the dismounting and mounting device, at least a part of the second moving devices are configured to each convey the batteries to be dismounted, wherein each of the second moving devices is configured to convey one of the batteries to be dismounted to the battery storage mechanism at a time, and at least two of the at least a part of the second moving devices are configured to convey respective batteries to be dismounted to the battery storage mechanism in overlapped periods.

Optionally, in the embodiments of the present application, the first moving device is configured to convey the battery to be mounted from battery storage mechanism to the predetermined position via a first path, and the second moving device is configured to convey the battery to be dismounted from the predetermined position to the battery storage mechanism via a second path, and the first path and the second path are different.

Optionally, in the embodiments of the present application, the first moving device conveys the battery to be mounted and the second moving device conveys the battery to be dismounted may both though a third path, and the first moving device and the second moving device are configured to reuse the third path in a time-division way.

Optionally, in the embodiments of the present application, after the battery to be mounted has been conveyed by the first moving device to the dismounting and mounting device, the first moving device and the second moving device may be configured to be arranged at both sides of the dismounting and mounting device 1010 respectively.

Optionally, in the embodiments of the present application, after the battery to be mounted has been conveyed by the first moving device to the dismounting and mounting device 1010, the first moving device and the second moving device 1020 may be configured to be arranged in order, so that the first moving device is arranged after the second moving device.

Optionally, in the embodiment of the present application, the dismounting and mounting device 1010 may be disposed below ground.

Optionally, in the embodiments of the present application, the system may further include: a lifting device for lifting the electrical equipment to a predetermined height in order for dismounting the battery to be dismounted and mounting of the battery to be mounted on the electrical equipment by the dismounting and mounting device 1010; the lifting device is further configured to lower the electrical equipment to the predetermined position after the battery to be mounted has been mounted by the dismounting and mounting device 1010 on the electrical equipment.

Optionally, in the embodiments of the present application, the predetermined height may be less than 50 cm.

Optionally, in the embodiments of the present application, the batteries to be mounted may include fully charged batteries and include battery filling blocks not having a battery cell; and wherein a total number of the fully charged batteries and the battery filling blocks is equal to a number of the batteries to be dismounted.

Optionally, in the embodiments of the present application, the batteries to be dismounted may include depleted batteries and include battery filling blocks not having a battery cell; wherein a total number of the depleted batteries and the battery filling blocks is equal to a number of the batteries to be mounted.

It should be understood that the battery replacement system 1000 can implement operations corresponding to those in the method 300, which will not be described again for sake of simplicity.

Finally, it should be noted that the above embodiments are only used to illustrate the technical solutions of the present application, but not to limit them; although the present application has been described in detail with reference to the foregoing embodiments, those of ordinary skill in the art should understand that modifications can be made to the technical solutions described in the foregoing embodiments, or equivalent substitutions may be made to some of the technical features, but these modifications or substitutions do not cause essence of the technical solutions to depart from spirits and scope of the technical solutions in the embodiments of the present application.

## Claims

1. A battery replacement method utilized in a battery replacement system, which comprises a dismounting and mounting device and moving devices, the dismounting and mounting device disposed at a position corresponding to a chassis of an electrical equipment, the moving devices comprising a first moving device and a second moving device, the method comprises:
controlling, after the electric equipment is parked at a predetermined position, the dismounting and mounting device to dismount a battery to be dismounted from the electric equipment, and the first moving device to convey a battery to be mounted to the dismounting and mounting device; and
controlling, after the battery to be dismounted has been dismounted by the dismounting and mounting device, the dismounting and mounting device to mount the battery to be mounted on the electrical equipment, and the second moving device to convey the battery to be dismounted which has been dismounted by the dismounting and mounting device to a battery storage mechanism.

2. The method according to claim 1, wherein the first moving device comprises a plurality of first moving devices, and in a case where there are a plurality of batteries to be mounted which are needed to be placed on the electrical equipment, the controlling the first moving device to convey the battery to be mounted to the dismounting and mounting device comprises:
controlling at least a part of the first moving devices each to convey the batteries to be mounted, wherein each of the first moving devices conveys one of the batteries to be mounted to the dismounting and mounting device at a time, and at least two of the at least a part of the first moving devices convey the respective batteries to be mounted in overlapped periods.

3. The method according to claim 1 or 2, wherein the second moving device comprises a plurality of second moving devices, and in a case where there are a plurality of batteries to be dismounted which are needed to be dismounted by the dismounting and mounting device, the controlling the second moving device to convey the battery to be dismounted which has been dismounted by the dismounting and mounting device to the battery storage mechanism comprises:
controlling at least a part of the second moving devices each to convey the batteries to be dismounted, wherein each of the second moving devices conveys one of the batteries to be dismounted to the battery storage mechanism at a time, and at least two of the at least a part of the second moving devices convey the respective batteries to be dismounted to the battery storage mechanism in overlapped periods.

4. The method according to any one of claims 1 to 3, wherein the controlling the first moving device to convey the battery to be mounted to the dismounting and mounting device comprises: controlling the first moving device to convey the battery to be mounted to the dismounting and mounting device through a first path; and
the controlling the second moving device to convey the battery to be dismounted which has been dismounted by the dismounting and mounting device to the battery storage mechanism comprises: controlling the second moving device to convey the battery to be dismounted to the battery storage mechanism through a second path,
wherein the first path and the second path are different.

5. The method according to any one of claims 1 to 3, wherein the first moving device conveys the battery to be mounted and the second moving device conveys the battery to be dismounted both though a third path, and the method further comprises :
controlling the first moving device and the second moving device to reuse the third path in a time-division way.

6. The method according to any one of claims 1 to 5, wherein after the battery to be mounted has been conveyed by the first moving device to the dismounting and mounting device, the method further comprises:
arranging the first moving device and the second moving device at both sides of the dismounting and mounting device respectively.

7. The method according to any one of claims 1 to 5, wherein after the battery to be mounted has been conveyed by the first moving device to the dismounting and mounting device, the method further comprises:
arranging the first moving device and the second moving device in order, so that the first moving device is arranged after the second moving device.

8. The method according to any one of claims 1 to 7, wherein before the electrical equipment is parked at the predetermined position, the method further comprises:
disposing the dismounting and mounting device below ground.

9. The method according to any one of claims 1 to 8, wherein the battery replacement system further comprises a lifting device, and the method further comprises:
controlling the lifting device to lift the electrical equipment to a predetermined height for the dismounting and mounting device to dismount the battery to be dismounted and to mount the battery to be mounted on the electrical equipment; and
controlling, after the battery to be mounted has been mounted by the dismounting and mounting device on the electrical equipment, the lifting device to lower the electrical equipment to the predetermined position.

10. The method according to claim 9, wherein the predetermined height is less than 50 centimeters.

11. The method according to any one of claims 1 to 10, wherein the batteries to be mounted comprises fully charged batteries and comprises battery filling blocks not having a battery cell, and
wherein a total number of the fully charged batteries and the battery filling blocks is equal to a number of the batteries to be dismounted.

12. The method according to any one of claims 1 to 11, wherein the batteries to be dismounted comprises depleted batteries and comprises battery filling blocks not having a battery cell, and
wherein a total number of the depleted batteries and the battery filling blocks is equal to a number of the batteries to be mounted.

13. A battery replacement system, comprising:
a dismounting and mounting device disposed at a position corresponding to a chassis of an electrical equipment for dismounting a battery to be dismounted from the electrical equipment and mounting a battery to be mounted on the electrical equipment; and
moving devices, comprising a first moving device and a second moving device, wherein the first moving device is configured to convey the battery to be mounted to the dismounting and mounting device while the dismounting and mounting device is dismounting the battery to be dismounted, and the second moving device is configured to convey the battery to be dismounted which has been dismounted by the dismounting and mounting device to a battery storage mechanism while the dismounting and mounting device is mounting the battery to be mounted on the electrical equipment.

14. The battery replacement system according to claim 13, wherein the first moving device comprises a plurality of first moving devices, and in a case where there are a plurality of batteries to be mounted which are needed to be placed on the electrical equipment, at least a part of the first moving devices are configured to each convey the batteries to be mounted while the dismounting and mounting device is dismounting the battery to be dismounted, wherein each of the first moving devices is configured to convey one of the batteries to be mounted to the dismounting and mounting device at a time, and at least two of the at least a part of the first moving devices are configured to convey the respective batteries to be mounted in overlapped periods.

15. The battery replacement system according to claim 13 or 14, wherein the second moving device comprises a plurality of second moving devices, and in a case where there are a plurality of batteries to be dismounted which are needed to be dismounted by the dismounting and mounting device, at least a part of the second moving devices are configured to each convey the batteries to be dismounted, wherein each of the second moving devices is configured to convey one of the batteries to be dismounted to the battery storage mechanism at a time, and at least two of the at least a part of the second moving devices are configured to convey respective batteries to be dismounted to the battery storage mechanism in overlapped periods.

16. The battery replacement system according to any one of claims 13 to 15, wherein the first moving device is configured to convey the battery to be mounted from battery storage mechanism to the predetermined position via a first path, and the second moving device is configured to convey the battery to be dismounted from the predetermined position to the battery storage mechanism via a second path, and the first path and the second path are different.

17. The power replacement system according to any one of claims 13 to 15, wherein the first moving device conveys the battery to be mounted and the second moving device convey the battery to be dismounted are both though a third path, and the first moving device and the second moving device are configured to reuse the third path in a time-division way.

18. The battery replacement system according to any one of claims 13 to 17, wherein after the battery to be mounted has been conveyed by the first moving device to the dismounting and mounting device, the first moving device and the second moving device are configured to be arranged at both sides of the dismounting and mounting device respectively.

19. The battery replacement system according to any one of claims 13 to 17, wherein after the battery to be mounted has been conveyed by the first moving device to the dismounting and mounting device, the first moving device and the second moving device are configured to be arranged in order, so that the first moving device is placed after the second moving device.

20. The battery replacement system according to any one of claims 13 to 19, wherein the dismounting and mounting device is disposed below ground.

21. The battery replacement system according to any one of claims 13 to 20, further comprising:
a lifting device for lifting the electrical equipment to a predetermined height in order for the dismounting and mounting device to dismount the battery to be dismounted and mount the battery to be mounted on the electrical equipment; and
the lifting device is further configured to lower the electrical equipment to the predetermined position after the battery to be mounted has been mounted by the dismounting and mounting device on the electrical equipment.

22. The battery replacement system according to claim 21, wherein the predetermined height is less than 50 centimeters.

23. The battery replacement system according to any one of claims 13 to 22, wherein the batteries to be mounted comprises fully charged batteries and comprises battery filling blocks not having a battery cell, and
wherein a total number of the fully charged batteries and the battery filling blocks is equal to a number of the batteries to be dismounted.

24. The battery replacement system according to any one of claims 13 to 22, wherein the batteries to be dismounted comprises depleted batteries and comprises battery filling blocks not having a battery cell,
wherein a total number of the depleted batteries and the battery filling blocks is equal to a number of the batteries to be mounted.
